Europäisches Patentamt

European Patent Office

Office européen des brevets

(11) Publication number: **0 518 569 A2**

# EUROPEAN PATENT APPLICATION

(21) Application number: **92305177.5**

(22) Date of filing: **05.06.92**

(51) Int. Cl.5: **F21V 21/26**

(30) Priority: **06.06.91 US 710975**

(43) Date of publication of application:
**16.12.92 Bulletin 92/51**

(84) Designated Contracting States:
**AT BE CH DE DK ES FR GB GR IT LI NL SE**

(71) Applicant: **Chadwick, Alan**
**940 25th Street NW 315-S**
**Washington D.C.(US)**

(72) Inventor: **Chadwick, Alan**
**940 25th Street NW 315-S**
**Washington D.C.(US)**

(74) Representative: **Burrows, Anthony Gregory**
**Business Centre West, Avenue One,**
**Business Park**
**Letchworth Garden City, Hertfordshire SG6**
**2HB(GB)**

(54) **Articulated arm system.**

(57) Two arms 14a and 14b are interconnected by a connection to provide an articulated arm system. The connection includes mating gear wheels 24 and 28 with one such wheel on each of the two arms 14a and 14b. The connection also includes side pieces 27 for providing a fixed distance between the respective axes of the gear wheels 24 and 28. The side pieces 27 include an extension 27a which constitutes a lever. As the angle between the arms 14a and 14b varies, the lever 27a moves to increase or decrease the tension in a spring 15 that counterbalances the varying forces on the articulated arm system.

Fig 2

EP 0 518 569 A2

## BACKGROUND OF THE INVENTION

Articulated arms for supporting a load such as a lamp are well known, see US-A-476,739; US-A-4,312,172; US-A-4,296,906; US-A-3,489,384; US-A-3,396,931; US-A-3,391,890; and US-A-4,545,555.

Other such patents include US-A-3,790,773; US-A-3,396,931; and US-A-3,219,303.

US-A-3,041,060 shows an articulated structure with a spring acting as equipoising means.

US-A-3,543,019 teaches an articulated structure with springs mounted respectively on assemblies, to provide counterbalancing forces, so that the lamp will remain at rest in any selected position.

US-A-4,160,536 and US-A-4,080,530 teach counterbalance springs for articulated structures such as lamps and television sets.

US-A-4,165,530 teaches an articulated lamp structure with a spring. The entire structure is said to be balanced by resilient and frictional forces.

US-A-3,239,184, and US-A-3,280,322 provide structures including springs to counterbalance lamps.

US-A-4,770,384 discloses a lamp stand including an articulated arm mechanism which has a parallel crank arm assembly which includes a pair of parallel arm members and first and second brackets positioned at opposite ends of the arm members. Each of the arm members is pivoted at its ends to adjacent brackets to thereby define a parallel crank. One of the arm members is shaped into a tubular configuration in order to enclose therein the other arm member, whereby the structure can have a single-arm-like appearance of aesthetic appeal.

US-A-4,234,150 discloses an extensible articulated manipulator arm system in which the distal end is movable in a straight line relative to the proximal end thereof. The system includes a first arm which incorporates a first parallelogram linkage and a second arm which includes a second parallelogram linkage, and the adjacent ends of the parallelogram linkages are drivingly connected to one another, whereby rotation of the first arm about the first end support alters the geometry of the first parallelogram linkage which in turn effects a corresponding alteration in the geometry of the second parallelogram linkage, thereby to cause movement of the distal end of the second arm in a straight line relative to the proximal end of the first arm.

The aforesaid patents make it clear that when an articulated arm supports a load, such as a lamp, the gravitational forces tending to destabilize the articulated arm are much greater when the load is at an extended lateral position, from the support for the articulated arm, than they are when the load is vertically above the support. Some of said prior art patents teach that a spring may be used to counterbalance those gravitational forces.

## SUMMARY OF THE INVENTION

According to one aspect of the present invention, there is provided an articulated arm system, comprising a support, an arm, first and second arcuate interengaging means carried by said support and said arm, respectively, the second means being arranged to roll in an engaged manner upon the first means while said arm turns about an axis which relatively moves in an arcuate path with respect to said first means, holding means holding the first and second interengaging means in interengagement, and sustaining means sustaining said arm against the action of gravity with a force which varies with change of the angle between the arm and the support, characterized in that said sustaining means permits said arm to be turned about said axis independently of said support.

According to a second aspect of the present invention, there is provided an articulated arm system, comprising a lower arm, an upper arm pivotally mounted upon the lower arm so as to be turnable relative thereto about a substantially horizontal first axis, a mounting pivotally supporting the lower arm so that the lower arm is turnable relative thereto about a substantially horizontal second axis, and sustaining means sustaining the lower and upper arms against the action of gravity, characterized in that the lower and upper arms are turnable from a collapsed condition to one side of a vertical plane containing said second axis to a fully extended condition to the opposite side of said vertical plane and that said sustaining means acts between an anchorage to said one side of said vertical plane and connected to said mounting and an anchorage connected to said upper arm.

According to a third aspect of the present invention there is provided an articulated arm system, comprising first and second arms, first and second mating gears on respective ends of the respective arms, and holding means for holding said gears in a mating relationship to provide a variable angle between said first and second arms, characterized in that said holding means includes force-producing means for applying a force to at least one of said first and second arms which force varies with changes in said angle between said first and second arms.

The present invention has various advantages. Provision of the first and second interengaging means gives smoother motion when a user applies relocating force to the outer end of the outer arm, but relocation of that outer end does not necessarily result in movement of the support. These interengaging means may be elastomeric rollers (with which the interengagement is frictional) or gearwheels, for example. Moreover, a single sustaining means, for example a single spring, can be employed to sustain both the first and the second arms. Furthermore, the or each arm can consist of only one link, as opposed to the conventional parallelogram linkage, which is more complicated and thus more expensive.

In a preferred embodiment, a connection joins first and second arms to form an articulated arm. Each of the first and second arms has first and second ends. The first end of the first arm is supported by a base or other support. The connection connects the second end of the first arm to the first end of the second arm. The connection includes the following: first and second gear wheels mounted on the second end of the first arm and the first end of the second arm, respectively; side plates holding the gear wheels in a mating relation, and also including an extension that acts as a lever arm. The aforesaid lever arm rotates as the angle between the two arms changes. This rotation increases or decreases the tension of a spring. The varying tension of the spring counterbalances the varying gravitational forces on the first and second arms due to the changes in the angle between the two arms.

## BRIEF DESCRIPTION OF THE DRAWINGS

Figure 1 is a perspective view of the invention as applied to an adjustable lamp.

Figure 2 is an exploded view of the apparatus of Figure 1.

Figures 3 to 7 illustrate the lamp of Figure 1 in five different positions.

Figure 8 illustrates a low voltage lamp version of the invention.

## DETAILED DESCRIPTION OF THE INVENTION

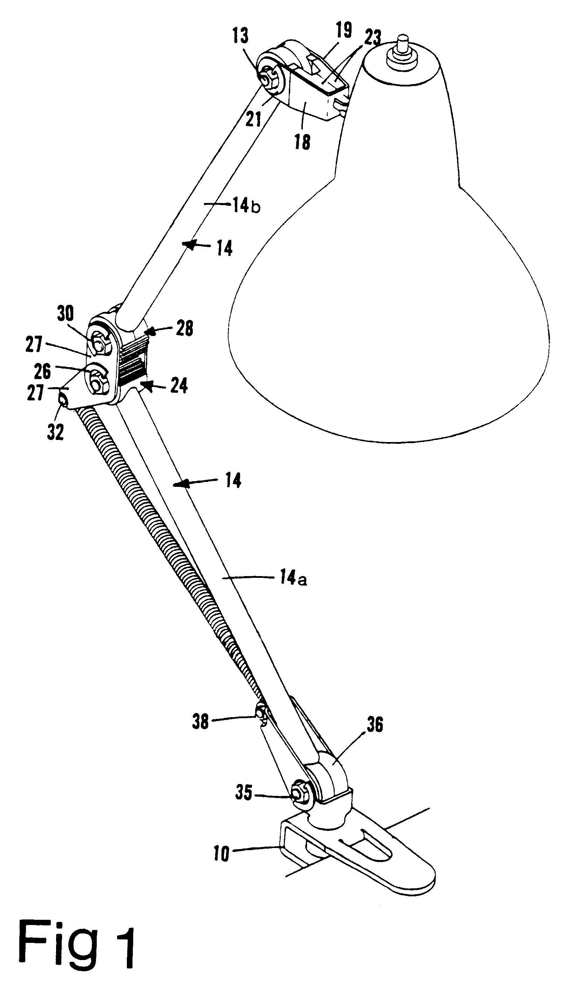

The lamp 20 of Figure 1 is supported by the articulated arm 14 which is pivotally connected at its lower end to the clamp 10. The arm 14 is connected to lamp 10 by connecting means 11. The lamp 20 is supported from the upper end of the articulated arm 14. The means 12, 13, 18, 19 for connecting the upper end of the arm 14 to the lamp 20 is conventional. This connecting means comprises a U-shaped bracket 18, 19 the right end of which is attached to the lamp 20. The arms 18 and 19 of the U-shaped bracket have a bolt 13 about which the arm 14 pivots relative to the bracket 18, 19. When the wing nut 21 is tightened the arms 18 and 19 are forced against the side walls of arm 14 thereby holding the lamp 20 in a fixed position relative to arm 14. The lamp 20 may be rotated relative to arm 14 by loosening nut 21 and rotating the lamp about bolt 13 which acts as a pivot. Washers 12 are located between the arms 18 and 19 and the arm 14. The lamp 20 has a supporting pin 22 which enters the end of U-shaped bracket 18, 19 and is held by clamps 23 which are forced together when the wing nut 21 is tightened.

The lower arm 14a, of the articulated arm 14, has gear wheel 24 attached to its upper end. The gear wheel 24 consists of two pieces 24a and 24b which have slots for receiving the upper end of arm 14a. The gear wheel 24 thus is securely fixed to the upper end of arm 14a. Bolt 25, with wing nut 26, hold the two side pieces 27 against the side walls of the gear wheel 24.

The lower end of arm 14b fits in slots in gear wheel 28 which consist of two pieces 28a and 28b. The bolt 29, with its wing nut 30, clamps the side pieces 27 against the side walls of of gear wheel 28. The wing nuts 26 and 30 may be tightened to secure the arms 14a and 14b in a fixed relation to each other. The side pieces 27 are further connected by a bolt 32, that has a nut 33, and receives a hook at the upper end of helical spring 15.

The U-shaped clamp 11 has arms 11a and 11b for receiving bolt 34. Wing nut 35 cooperates with bolt 34 so that the wing nut 35 may be tightened to fix the relation between arms 11a, 11b and both the lower arm 14a and its washers 36. A bolt 37 passes through holes located near the free ends of arms 11a and 11b. Nut 38 holds bolt 37 in place. The bolt 37 receives the hook at the lower end of spring 15.

The plastic gear wheels 24 and 28 may have teeth over the entire 360 degrees of their periphery, or alternatively the teeth may cover only a sector of the periphery. Moreover, the gear wheels 24 and 28 may include a special tooth, or other means, to limit the angle over which the arms 14a and 14b may move relative to each other.

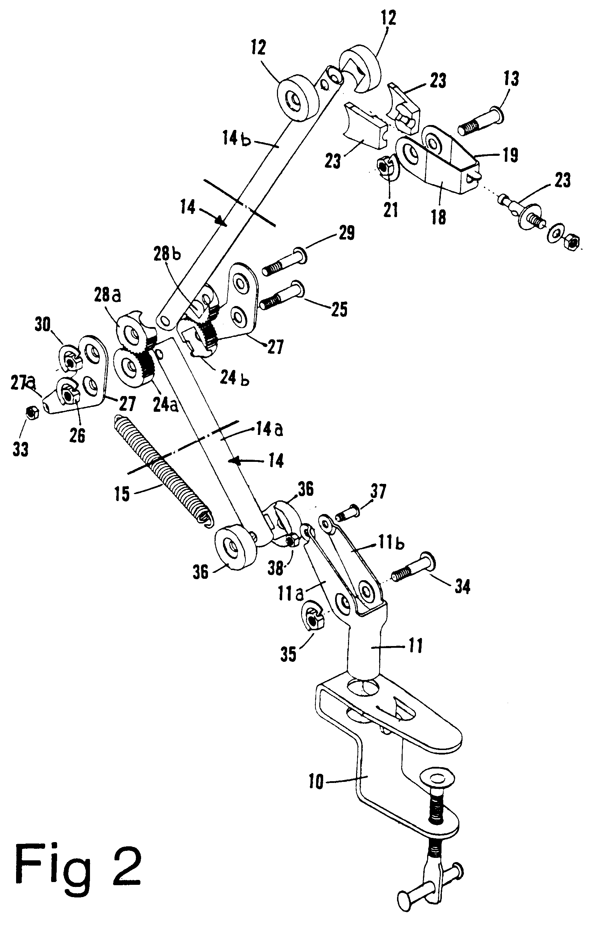

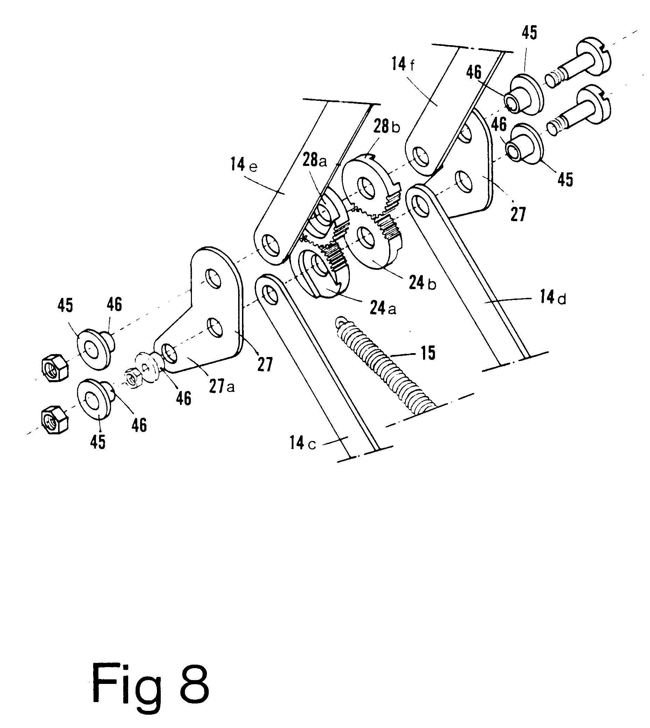

Figure 8 shows how the invention may be applied to a low voltage (12 volts) lamp. Strips or bars 14c and 14d in Figure 8 replace tube 14a of Figures 1 to 7. Similarly strips 14e and 14f replace tube 14b. The low voltage is fed to the lamp along strips 14c and 14e and also along strips 14e and 14f. To avoid short circuits, insulating washers 45 are used. These washers have hollow insulating projections 46 which pass into the metal parts such as 14c, 14d, 14e, 14f, 27.

## Operation

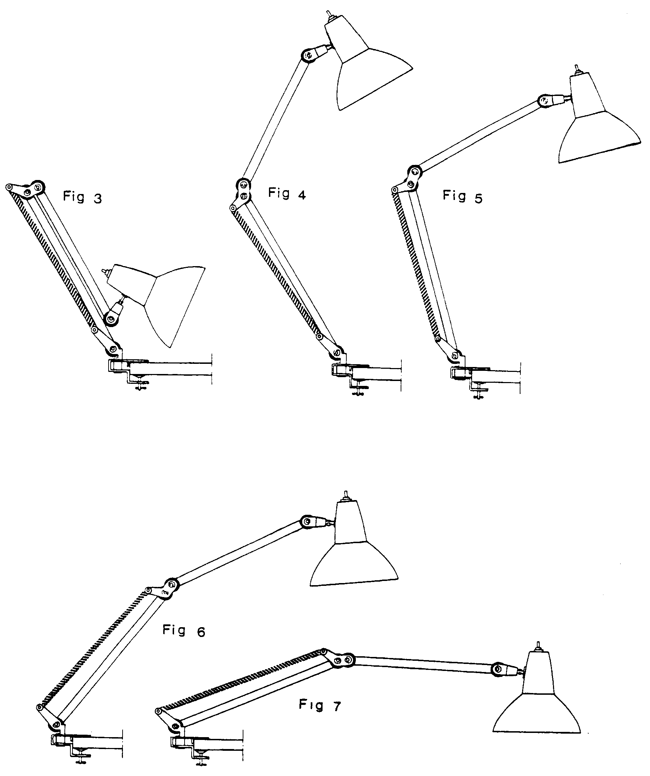

When the several wing nuts 21, 26, 30 and 35 are slightly loosened. the articulated arm 14 may be moved to any of the positions shown in Figures 3 to 7, incl. or to any intermediate position.

It is noted that as the lamp 20 is moved from the position of Figure 4 to the position of Figure 7, the side plates 27 rotate about bolt 25 to swing bolt 32 clockwise and thereby increase the tension in spring 15. This increased tension tends to rotate side plates 27 counterclockwise. At the same time the movement of the lamp to the right from Figures 4 to Figure 7 applies a torque to side plates 27 tending to rotate them clockwise. By selecting a correct spring 15, the additional torque tending to rotate side plates 27, when the lamp 20 is moved from Figure 4 to Figure 7, will be substantially exactly counterbalanced by the added tension in spring 15.

Once the desired position of the lamp 20 is selected, the articulated arm 14 remains in place by reason of the friction provided by wing nuts 35, 26 and 30.

The varying tension of spring 15 is due to the extension or projection 27a which acts as a lever. Since the bolt 37 remains stationary while the lamp 20 is moved from the position of Figure 3 to the position of Figure 7, it is the position of the bolt 32 that determines the tension of the spring 15. It is noted that as the lamp 20 moves from the position of Figure 3 to that of Figure 7, the bolt 32 rotates clockwise about bolt 25 and thus moves farther away from bolt 37 thereby increasing the tension in spring 15. This increased tension counterbalances the increased torque resulting from the increase in leverage as the articulated arm 14 moves from its position shown in Figure 3 to its position of Figure 7.

## Claims

1. An articulated arm system, comprising a support (14a), an arm (14b), first and second arcuate interengaging means (24,28) carried by said support (14a) and said arm (14b), respectively, the second means (28) being arranged to roll in an engaged manner upon the first means (24) while said arm (14b) turns about an axis which relatively moves in an arcuate path with respect to said first means (24), holding means (27) holding the first and second interengaging means in interengagement, and sustaining means (15) sustaining said arm (14b) against the action of gravity with a force which varies with change of the angle between the arm (14b) and the support (14a), characterized in that said sustaining means (15) permits said arm (14b) to be turned about said axis independently of said support (14a).

2. A system according to claim 1, wherein said support (14a) is a second arm (14a) pivotally supported upon a mounting (11) so as to be turnable about a second axis relative to said mounting (11).

3. A system according to claim 2, wherein said sustaining means (15) reacts upon said mounting (11) and sustains also said second arm (14a) against the action of gravity.

4. A system according to any preceding claim, wherein the or each arm (14a, 14b) comprises a single axis of pivoting at that end thereof nearer said holding means (27).

5. A system according to any preceding claim, wherein said holding means (27) provides a lever arm (27a) upon which said sustaining means (15) acts to sustain said arm (14b).

6. A system according to any preceding claim, wherein said first and second interengaging means (24,28) comprise respective gears (24,28).

7. A system according to any preceding claim, wherein said arm (14b) carries a lamp (20) at that end thereof further from said first and second interengaging means (24,28).

8. A system according to any preceding claim, wherein said holding means (27) comprises a link articulatedly interconnecting said support (14a) and said arm (14b).

9. An articulated arm system, comprising a lower arm (14a), an upper arm (14b) pivotally mounted upon the lower arm (14a) so as to be turnable relative thereto about a substantially horizontal first axis, a mounting (11) pivotally supporting the lower arm (14a) so that the lower arm (14a) is turnable relative thereto about a substantially horizontal second axis, and sustaining means (15) sustaining the lower and upper arms (14a, 14b) against the action of gravity, characterized in that the lower and upper arms (14a, 14b) are turnable from a collapsed condition to one side of a vertical plane containing said second axis to a fully extended condition to the opposite side of said vertical plane and that said sustaining means (15) acts between an anchorage (37) to said one side of said vertical plane and connected to said mounting (11) and an anchorage (25) connected to said upper arm (14b).

10. An articulated arm system, comprising first and second arms (14a, 14b), first and second mating gears (24,28) on respective ends of the respective arms (14a, 14b), and holding means (27) for holding said gears (24, 28) in a mating relationship to provide a variable angle between said first and second arms (14a, 14b), characterized in that said holding means (27) includes force-producing means (15) for applying a force to at least one of said first and second arms (14a, 14b) which force varies with changes in said angle between said first and second arms (14a, 14b).

# Fig 1

# Fig 2

Fig 3

Fig 4

Fig 5

Fig 6

Fig 7

EP 0 518 569 A2

Fig 8